# EUROPEAN PATENT APPLICATION

(11) **EP 3 786 387 A1**
(43) Date of publication of application: **03.03.2021**
(21) Application number: 19000504.1
(22) Date of filing: 05.11.2019
(51) Int. Cl.: E04F 11/18, F16B 2/06, F16B 5/06, F16B 43/00

(54) **METHOD OF ATTACHING A PANEL AND AN ADJUSTABLE BRACKET FOR PERFORMING THIS METHOD**

(30) Priority: 28.08.2019 SK 982019
(71) Applicant: Lacko, Vladimir, 082 35 Hendrichovce (SK)
(72) Inventor: Lacko, Vladimir, 082 35 Hendrichovce (SK)
(74) Representative: Vasil, Martin

(57) **Abstract**

The method of attaching the panel and an adjustable bracket for performing this method by base part of the clamp (4), which is connected to base support frame (15) or to any construction, counter to the base part of the clamp (4) is situated fixing part of the clamp (3), which is used as a fixing part for the indirect clamping of the panel (14) by elastic adjustable inserts (5) and by tightening screws (11), while between elastic adjustable inserts (5) it is situated support plate with an elastic washer (6) and cross locking pin with an elastic insert (7) for the shape-wise clamping of the panel (14). The method of attaching the panel and an adjustable bracket for performing this method is suitable for clamping of the panels (14) of different thickness from 6 to 13 mm, which is done by rotating of elastic adjustable inserts (5) to different positions towards spiral contact surfaces situated in inner section of base part of the clamp (4) and fixing part of the clamp (3).

## Description

### Technical Field

Construction and assembly of railings; assembly of panels of glass, plastic, acrylic glass or fillings of other material.

### Background of the Invention

Nowadays, there are brackets on the market with panels made of glass, acrylic glass, plastic or other material, which allow for clamping, by exerting a clamping force, with the elastic inserts. These elastic inserts need to be replaced depending on the thickness of the panel. The current elastic inserts and the associated panel-clamping method cannot be used for various panel thicknesses. Nowadays, to mount panels of different thickness, it is necessary to use a large number of mounting materials and different types of elastic inserts. The second, presently existing method of clamping the panel by exerting a clamping force is the clamping by means of adjustable elastic inserts. This clamping method ensures no protection of panels against falling out. The third known method of clamping a glass panel, known to the market, is shape-wise clamping. In this method, a pin is inserted into the hole of the panel, or a support plate, thus securing the panel against falling out.

### Subject Matter of the Invention

The presented panel-clamping method and the adjustable bracket to implement this method are aimed at simplifying the assembly of the glass or other panel in railings by using the universal elastic inserts for a range of panel thicknesses (from 6mm to 8.76 mm and from 10mm to 12.76 mm) to clamp glass panels by exerting a clamping force. The panel thicknesses are eliminated by the thickness-adjustable elastic inserts while, at the same time, they also allow for the panel clamping using a cross insertion pin or a support plate.

The following terms are used in the description of the invention, with the numerical designation as referred to below.
- 1: Fixing clamp, which is an adjustable bracket itself for implementing the method of clamping the panel
- 2: Clamping halves, also called the parts of the clamp
- 3: Fixing part of the clamp
- 4: Base part of the clamp
- 5: Adjustable elastic insert
- 6: Support plate with an elastic washer
- 7: Cross locking pin with an elastic insert
- 8: Spiral contact surface
- 9: Flexibly deformable blade
- 10: Shape divider
- 11: Tightening screws
- 12: Mounting screw
- 13: Clamping gap
- 14: Panel (not included in the mounting bracket)
- 15: Base support frame (not included in the mounting bracket)

The present invention relates to the field of structural clamping of the panel 14, where these panels are used, in particular, to fill the space inside railings, and the invention relates to an adjustable bracket, which is a fixing clamp 1 for clamping the glass or other panel 14 consisting of two clamping halves 2, of which one, the base part of the clamp 4 with the elastic adjustable insert 5, is fixed to the base support frame 15 or the structure, and the other, the fixing part of the clamp 3 with the elastic adjustable insert 5, is used as a fixing part for the indirect clamping of the panel 14 by force, where the clamping halves 2 are connected by tightening screws 11. The present invention further relates to the shape of the spiral contact surfaces 8 of the elastic adjustable inserts 5 and the cavities of the clamping halves 2 of the fixing clamp 1, which allow continuous adjustment of the width of the clamping gap 13 for the gripping (by force) clamping of the panel 14. The subject matter of the invention also includes a possibility of shape-wise clamping of the panel 14 by means of a cross locking pin with an elastic insert 7, or a support plate with an elastic washer 6, or a combination thereof, and their clamping.

The fixing clamp 1 of the panel 14 is designed so that the base part of the clamp 4 is secured to the base support frame 15 or a structure by a mounting screw 12 inside the base part of the clamp 4 and, after the fixing clamp 1 was assembled, it prevents access to the mounting screw 12, which is also visually hidden.

The elastic adjustable inserts 5 inserted into the cavities of the base part of the clamp 4 and the fixing part of the clamp 3 are shape-designed so that the shape of the spiral contact surfaces 8 between the cavity of the base part of clamp 4, the fixing part of the clamp 3 and the elastic adjustable inserts 5 is formed by three contact surfaces 8 arranged in a circle one behind the other, allowing a continuous adjustment of the clamping gap 13 to clamp the panel 14 by force, depending on the thickness of the panel 14.

To adjust the clamping gap 13 of the fixing clamp 1, the elastic adjustable inserts 5 are circumferentially shaped 10 in view of the predefined recommended rotational positions of the elastic adjustable insert 5 in the cavity of the base part of the clamp 4 and the fixing part of the clamp 3.

The elastic inserts 5 are designed with an inner hole within their axis that allows the cross locking pin with the elastic insert 7 to be inserted into the base part of the clamp 4 and the fixing part of the clamp 3 to clamp the panel 14 shape-wise. The inner hole of the elastic adjustable insert 5 contains a flexibly deformable blade 9, the novelty of which is in the fact that the inserted cross securing pin with the elastic insert 7 for the shape-wise clamping of the panel 14 is clamped and secured against falling out during the assembly of the panel 14, which is a common problem with the currently known systems of clamping a cross locking pin with the elastic insert 7 in the fixing clamps 1 of the panel 14.

The shape of the clamping halves 2 of the fixing clamp 1 in the panel 14 is designed to allow an alternative shape-wise fitting of the panel 14 also by inserting a support plate with an elastic washer 6. This, as with the cross locking pin with an elastic insert 7 described above, has to secure the panel 14 against its possible dropping or slipping out of the fixing clamp 1, especially in applications, where there is a risk of the panel 14 falling out.

An element of novelty is in the fact that the presented adjustable panel bracket allows the panel 14 to be clamped by force by means of flexibly adjustable inserts 5, while also allowing the panel 14 to be shape-wise clamped by means of the cross locking pin 7 and the support plate 6. This system allows the panel 14 to be clamped both shape-wise and by force, but if by force, only with the replaceable elastic adjustable inserts 5. The novelty of this clamping system consists in the fact that one system, which is one adjustable bracket of the panel 14, allows the panel 14 to be clamped shape-wise or by force, or in both ways at the same time.

In addition, the novelty feature is in the fact that this panel-clamping system 14 allows the panels 14 to be clamped in a wide range of thicknesses of the panel 14 to be clamped, in particular in the range of 6 to 13 mm panel thickness, using a small number of mounting parts. Fixing the panels with a thickness of 6 to 13 mm panel thickness requires the use of only two kinds of elastic adjustable inserts 5.

Another advantage of the presented panel 14 clamping system is the simplification during assembly. This simplification consists in the possibility of correcting any inaccuracies in the assembly by means of an elastic adjustable insert 5; hence this aforementioned clamping system allows a simpler and more time-saving placement of the panel 14 in the desired mounting position.

Finally, the advantage of the present clamping system is in the fact that it is possible to remove the panel 14 from the fixing clamp 1, insert other panel, also with other thickness, into the fixing clamp 1, and then reassemble the same fixing clamp without compromising the properties of the fixing clamp 1. Thus, the present fixing clamp 1 holds the new panel 14 equally firmly and securely.

### Brief Description of the Drawings

Figure No. 1 shows an adjustable panel bracket from different views; the panel itself is not shown thereon.
Figure No. 2, which is also an illustration to the annotation, shows an adjustable panel bracket as seen from the profile, also with reference marks.

### Examples of Using the Invention

The adjustable panel bracket can be used for assembling the railings or in any other mounting of panels to a frame or solid base. The adjustable bracket is used to fasten the panel of any material, be it glass panel, plastic panel, acrylic glass panel and the like.

Primarily, the adjustable panel bracket can be used to assemble and replace the panels of different thicknesses, as the presented bracket allows clamping the panels with a thickness of 6 to 13 mm, requiring only two kinds of elastic adjustable inserts to be used.

### List of Reference Marks

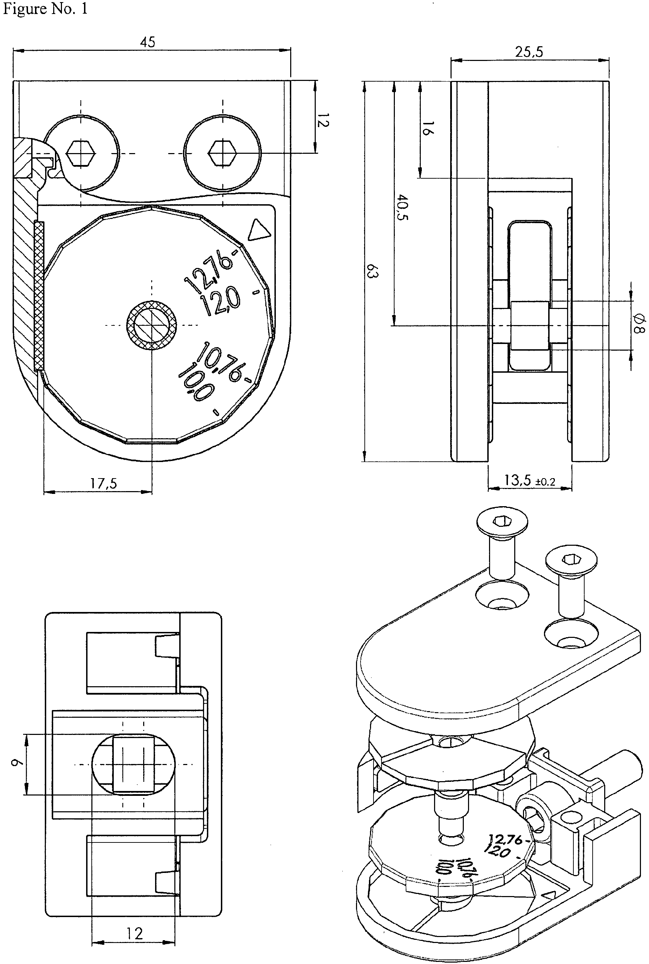

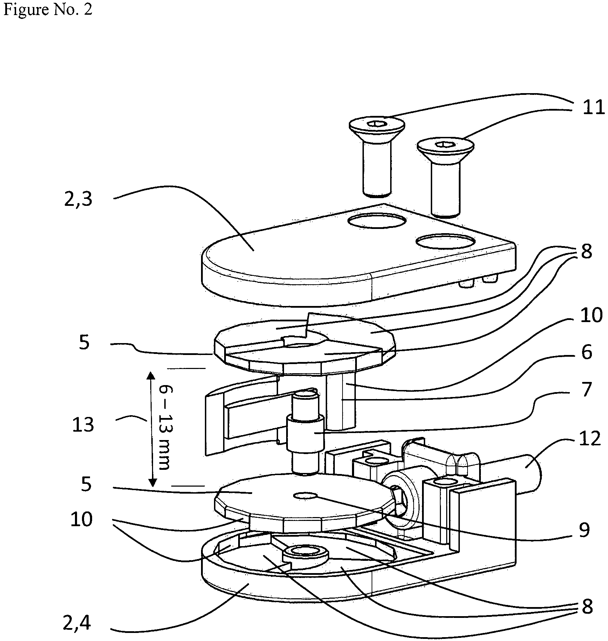

Legend to the attached drawings - Figures No. 1 and 2:
- 1: Fixing clamp, which is an adjustable bracket itself for implementing the method of clamping the panel
- 2: Clamping halves, also called the parts of the clamp
- 3: Fixing part of the clamp
- 4: Base part of the clamp
- 5: Adjustable elastic insert
- 6: Support plate with an elastic washer
- 7: Cross locking pin with an elastic insert
- 8: Spiral contact surface
- 9: Flexibly deformable blade
- 10: Shape divider
- 11: Tightening screws
- 12: Mounting screw
- 13: Clamping gap
- 14: Panel (not included in the mounting bracket)
- 15: Base support frame (not included in the mounting bracket)

### Industrial Usability

The method of clamping the panels and an adjustable bracket for implementing this method will find particular application in the construction industry in the assembly of panels in railings, as well as in mounting the panels on the substrates other than railings, for example in the installation of the ornamental or advertising panels.

## Claims

1. The method of clamping a panel, for clamping the panel by force, or for shape-wise clamping of the panel, or by force and shape-wise simultaneously, is **characterised in the fact** that, by means of a base part of the clamp (4), which is attached to the base support frame (15) or a structure, the fixing part of the clamp (3) is located opposite the base part of the clamp (4), which is used as a fixing part for indirectly force-clamping of the panel (14) by means of the elastic adjustable inserts (5) using the tightening screws (11), where the elastic washer (6) and a cross locking pin with an elastic insert (7) are placed between the elastic adjustable inserts (5) for shape-wise clamping of the panel (14).

2. The adjustable panel mounting bracket according to Claim 1, **characterised in the fact** that it consists of a base part of the clamp (4), which is attached to the base support frame (15) or the structure, the fixing part of the clamp (3) is located opposite the base part of the clamp (4), which is used as a fixing part for indirectly force-clamping of the panel (14) by means of the elastic adjustable inserts (5) using the tightening screws (11), where the elastic washer (6) and a cross locking pin with an elastic insert (7) are placed between the elastic adjustable inserts (5) for shape-wise clamping of the panel (14).

3. The adjustable panel mounting bracket according to Claim 1, **characterised in the fact** that elastic, adjustable inserts (5) are provided for clamping of the panel (14) by force, the shape of which, along with the shape of the cavities of the clamping halves (2), permit for continuous adjustment of the clamping gap (13) for the clamping of the panel (14) by force, depending on the panel (14) thickness, where the adjustment of the clamping gap (13) allows the proposed three-step shape of the spiral contact surfaces (8) between both the base part of the clamp (4) as well as the fixing part of the clamp (3) and the adjustable inserts (5), where the size of the clamping gap (13) is adjusted by rotating the elastic adjustable inserts (5) to different positions opposite to the spiral contact surfaces located in the inner portion of the base part of the clamp (4) and the fixing part of the clamp (3).

4. The adjustable panel mounting bracket according to Claim 1 **characterised by the fact** that, for market needs and for ease of assembly, the base part of the clamp (4) and the fixing part of the clamp (3) are shaped (10) inside the inner circumference in the space reserved for inserting the elastic adjustable insert (5) to ensure the recommended positioning of the elastic adjustable insert (5), where the shaping of outer circumference of the elastic adjustable insert (5) also matches to this shaping (10), and the size of the clamping gap (13) is adjusted by rotating the elastic adjustable inserts (5) to different positions opposite the spiral contact surfaces located in the inner portion of the base part of the clamp (4) and the fixing part of the clamp (3).

5. The adjustable panel mounting bracket according to Claim 1 **characterised by the fact** that it allows the panel (14) to be shape-wise clamped by means of a cross locking pin with an elastic insert (7) which, when assembled, is inserted into the base part of the clamp (4) after the elastic adjustable insert (5) was inserted, where the inner shape of the opening of the elastic adjustable insert (5) comprises a flexibly deformable blade (9) that secures the insertion of the cross locking pin with an elastic insert (7), thereby preventing the cross locking pin with an elastic insert (7) from spontaneously falling out of the base part of the clamp (4) during assembly and installation of the panel (14).

6. The adjustable panel mounting bracket according to Claim 1 **characterised by the fact** that it allows the panel (14) to be shape-wise clamped by means of a support plate with an elastic washer (6), the use of which is universal for both sides of insertion into the mounting halves (2) of the clamp (1), for the application of the support plate with an elastic washer (6), it is not necessary to drill the panel (14) to secure the panel (14) against sliding out of the fixing clamp (1).

7. The adjustable panel mounting bracket according to Claim 1 **characterised by the fact** that it allows the panel (14) to be clamped by force and shape-wise by using the cross locking pin with an elastic insert (7), or a support plate with an elastic washer (6), or a combination thereof.

8. The adjustable panel mounting bracket according to Claim 1 **characterised by the fact** that it allows the panel (14) to be clamped continuously over a wide range of thicknesses of 6 to 13mm, using only two types of elastic adjustable inserts (5), which has a positive effect on the number of parts that form the adjustable bracket of the panel.
